# EUROPÄISCHE PATENTANMELDUNG

(11) **EP 1 065 479 A2**
(43) Veröffentlichungstag der Anmeldung: **03.01.2001**
(21) Anmeldenummer: 00890051.6
(22) Anmeldetag: 21.02.2000
(51) Int. Cl.: G01G 21/23

(54) **Lastaufnehmer für eine Waage**

(30) Priorität: 30.06.1999 AT 45599 U
(71) Anmelder: Bizerba-Waagen Ges. m.b.H. &Co. KG., 1239 Wien (AT); Econsult Betriebsberatungsgesellschaft m.b.H., 2334 Vösendorf (AT); Tripan Leichtbauteile Wimmer + Schöftner GmbH & Co. KG, 4040 Linz (AT)
(72) Erfinder: Schlawa, Manfred, 1239 Wien (AT); Wimmer, Peter, Dipl.-Ing., 4040 Linz (AT)
(74) Vertreter: Rippel, Andreas, Dipl.-Ing.

(57) **Zusammenfassung**

Bei einem Lastaufnehmer (1) für eine Waage, der über Wägezellen (2) gelagert ist, ist sowohl eine obere Decklage (6,10) als auch eine untere Decklage (7,10) mit Leichtbauplatten (5,8,9,12), wie Holzplatten oder Spanplatten oder Kunststoffplatten, z. B. Wabenplatten, verklebt.

Dadurch wird eine wesentliche Gewichtsersparnis erreicht.

## Beschreibung

Die Erfindung bezieht sich auf einen Lastaufnehrner für eine Waage, der über Wägezellen gelagert ist.

Es sind schon die verschiedensten Formen von Lastaufnehmern je nach Art der Waage bekannt geworden. Die Waagen können dabei als Plattformwaagen, als Tiefbett- oder Durchfahrwaagen, als Palettenwaagen, als Tisch- und Bockwaagen, als Fahrzeugwaagen und so weiter ausgebildet sein. Die Traglasten können in einem Bereich von etwa 3 Kilogramm bis 100 Tonnen liegen.

Bekannte Lastaufnehmer weisen eine Rahmenbauweise mit handelsüblichen Walzprofilen auf, auf die dann als Decklage ein Brückenblech aus Stahl gesetzt wird, um eine tragfähige Brückenkonstruktion zu erhalten.

Nachteilig bei diesen bekannten Anordnungen ist, daß das Brückenblech keine tragende Funktion besitzt, obwohl Blechdicken von manchmal 6 bis 10 mm erforderlich sind. Daraus ergibt sich sowohl ein sehr hohes Gewicht als auch ein großer Materialaufwand.

Die Erfindung hat es sich zum Ziel gesetzt, einen Lastaufnehmer der eingangs genannten Art zu schaffen, bei dem durch optimale Ausnützung der verwendeten Materialien bei mindestens gleicher Tragfähigkeit ein erheblich geringerer Materialaufwand und damit ein geringeres Gewicht gegeben ist. Erreicht wird dies dadurch, daß der Lastaufnehmer einen Kern aufweist, der aus Leichtbauplatten besteht, und dieser Kern sowohl an seiner Oberseite als auch an seiner Unterseite mit einer Decklage verklebt ist.

Durch die Verklebung der Leichtbauplatten mit den Decklagen wird eine optimale Materialverteilung erreicht. Ein Brückenblech im üblichen Sinne entfällt, da die obere Decklage sowohl ein tragendes Element der Plattform ist als auch eine tragfähige und sogar befahrbare Abdeckung bilden kann. Die Decklagen können strukturierte oder strukturfreie Bleche verschiedenster Stärken sein, aber auch z. B. aus glasfaserverstärktem Kunststoff bzw. Kunstharzlaminat bestehen.

Die Vorteile der Erfindung sind insbesondere ein geringeres Gewicht, geringere Kosten, der Einsatz von weniger Stahl bzw. Edelstahl, sowie geringere Transportkosten und damit auch eine Energieeinsparung beim Transport. Weiters kann eine glatte Oberfläche ohne Schmutzecken und offene Spalten erreicht werden, was eine schnellere und bessere Reinigung insbesondere beim Einsatz in der Nahrungsmittelindustrie und chemischen Industrie ermöglicht. Überdies wird ein gutes Stoßabsorptionsverhalten erzielt, wodurch die Gefahr von Wägezellenschäden durch eine übermäßige dynamische Belastung verringert wird. Das Ausmaß einer Rückfederung bei Überbelastung ist deutlich höher als bei Stahlkonstruktionen.

Die Leichtbauplatten können z. B. Holzplatten oder Spanplatten oder Kunststoffplatten sein. Auch eine Ausbildung als Wabenplatten aus Leichtmetall oder Kunststoff ist möglich.

Nachstehend ist die Erfindung anhand von in den Zeichnungen dargestellten Ausführungsbeispielen näher beschrieben, ohne auf diese Beispiele beschränkt zu sein. Dabei zeigen: Fig. 1 eine Seitenansicht einer Plattformwaage; Fig. 2 eine Draufsicht auf diese Waage; die Fig. 3 bis 6 jeweils einen Teilschnitt durch einen erfindungsgemäßen Lastaufnehmer.

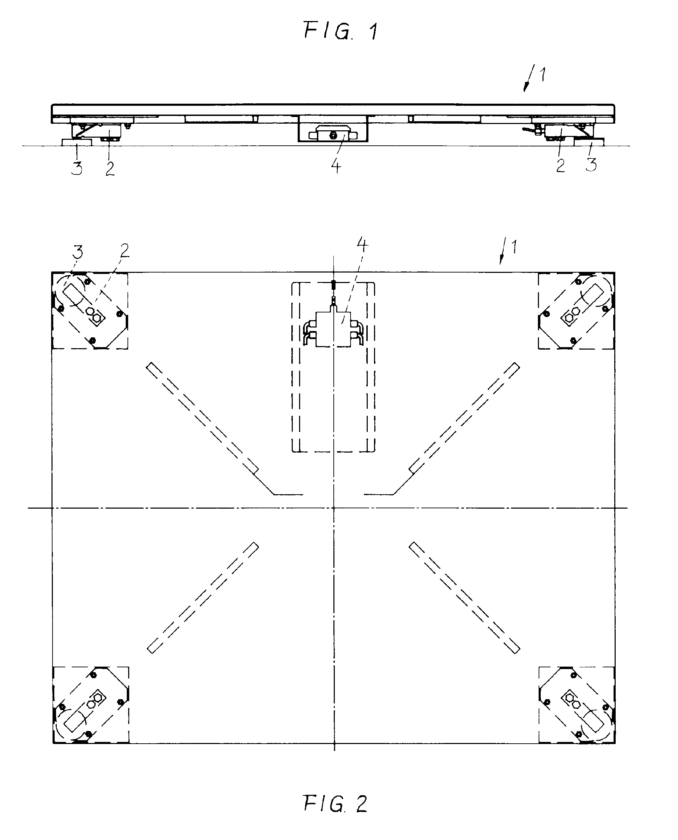

Gemäß den Fig. 1 und 2 wird die Plattform 1 einer Plattformwaage über Wägezellen 2 auf Wägezellenlagern 3 abgestützt. Die von den Wägezellen 2 gemessenen Werte werden in bekannter Weise über einen Anschlußkasten 4 auf ein nicht dargestelltes Anzeigegerät übertragen.

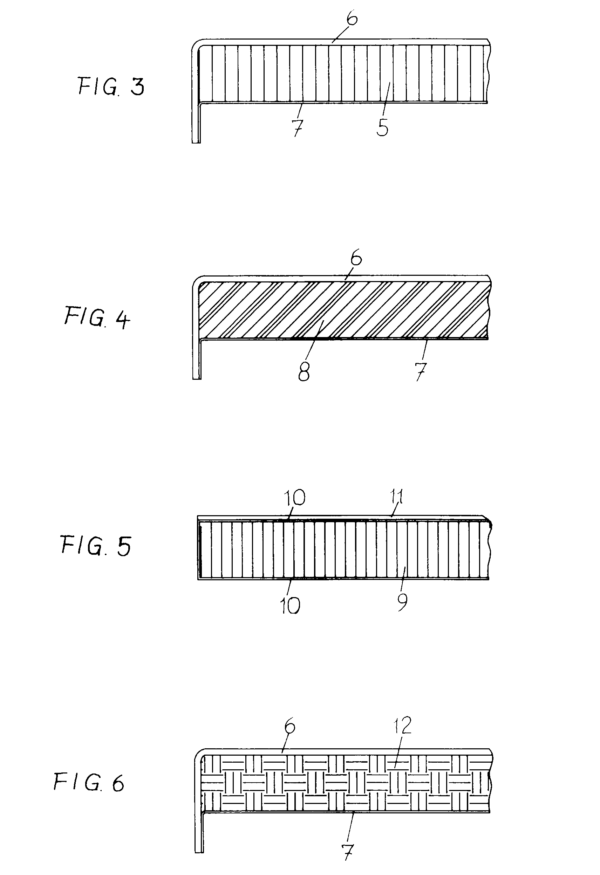

Die Plattform 1 kann gemäß Fig. 3 als Kern eine Aluminiumwabe 5 aufweisen, die mit einer Decklage 6 aus Blech verklebt ist. Diese Decklage 6 kann aus galvanisch beschichtetem C-Stahl oder rostfreiem Edelstahl, aber auch aus glasfaserverstärktem Kunststoff bestehen. Auch die Unterseite der Aluminiumwabe 5 ist mit einer Decklage 7 z. B. aus Stahlblech verklebt.

Beim Ausführungsbeispiel nach Fig. 4 besteht der Kern 8 aus Kunststoff, z. B. Polyurethan, der mit der Decklage 6 aus Stahlblech und der unteren Decklage 7 aus Stahlblech verklebt ist.

Der Kern des Ausführungsbeispieles nach Fig. 5 besteht aus Kunststoffwaben 9, die allseitig von einem Kunstharzlaminat 10 ummantelt sind. Dieses Kunstharzlaminat 10 bildet die obere und untere Decklage. Eine Verschleißplatte 11 ist mit der oberen Decklage 10 verbunden, z. B. verklebt.

Schließlich besteht der Kern 12 des Ausführungsbeispieles nach Fig. 6 aus Holz und ist an seiner Oberseite mit der Decklage 6 aus Stahlblech und an seiner Unterseite mit der Decklage 7 aus Stahlblech verklebt.

Im Rahmen der Erfindung sind zahlreiche Abänderungen möglich. So könnten an der Oberseite der Lastaufnehmer umlaufende Randstege vorgesehen sein. Die beispielsweisen Ausführungsarten nach den Fig. 3 bis 6 sind auch keineswegs auf Plattformen beschränkt, sondern können bei allen Formen von Lastaufnehmern angewendet werden.

## Patentansprüche

1. Lastaufnehmer (1) für eine Waage, der über Wägezellen (2) gelagert ist, **dadurch gekennzeichnet**, daß der Lastaufnehmer (1) einen Kern (5,8,9,12) aufweist, der aus Leichtbauplatten besteht, und dieser Kern (5,8,9,12) sowohl an seiner Oberseite als auch an seiner Unterseite mit einer Decklage (6,7,10) verklebt ist.

2. Lastaufnehmer nach Anspruch 1, **dadurch gekennzeichnet**, daß die Leichtbauplatten Holzplatten (12) sind.

3. Lastaufnehmer nach Anspruch 1, **dadurch gekennzeichnet**, daß die Leichtbauplatten Spanplatten sind.

4. Lastaufnehmer nach Anspruch 1, **dadurch gekennzeichnet**, daß die Leichtbauplatten Kunststoffplatten (8,9) sind.

5. Lastaufnehmer nach Anspruch 1, **dadurch gekennzeichnet**, daß die Leichtbauplatten Wabenplatten (5,9) sind.

6. Lastaufnehmer nach einem der Ansprüche 1 bis 5, **dadurch gekennzeichnet**, daß oberhalb der oberen Decklage (10) eine insbesondere als Blechplatte (11) ausgebildete Verschleißschicht angeordnet ist.

7. Lastaufnehmer nach einem der Ansprüche 1 bis 5, **dadurch gekennzeichnet**, daß die obere (6) und untere (7) Decklage aus Blech besteht.

8. Lastaufnehmer nach einem der Ansprüche 4 bis 6, **dadurch gekennzeichnet**, daß die obere und untere Decklage (10) aus glasfaserverstärktem Kunststoff oder Kunstharzlaminat besteht.
